# EUROPEAN PATENT SPECIFICATION

(11) **EP 0 403 654 B1**
(45) Date of publication and mention of the grant of the patent: **25.01.1995**
(21) Application number: 89905198.1
(22) Date of filing: 19.04.1989
(51) Int. Cl.: B01F 3/04, B01J 10/00, C02F 3/12, C02F 3/20

(54) **MULTIPLE GAS PHASE LIQUID TREATMENT APPARATUS**
VORRICHTUNG ZUR BEHANDLUNG VON FLÜSSIGKEITEN MIT MEHREREN GASPHASEN
APPAREIL DE TRAITEMENT DE LIQUIDES A PHASES GAZEUSES MULTIPLES

(30) Priority: 21.04.1988 JP 98776/88
(43) Date of publication of application: 27.12.1990
(73) Proprietor: YUUGEN KAISYA PARASIGHT, Chiba 280 (JP)
(72) Inventor: NOJIMA, Youko, Kagoshima 890 (JP); NOJIMA, Hisatake, Kagoshima 890 (JP)
(74) Representative: Goddar, Heinz J., Dr.
(86) International application number: PCT/JP89/00416
(87) International publication number: WO 89/10183

(56) References cited:
- BE-A- 396 654
- BE-A- 565 334
- DE-C- 318 766
- FR-A- 318 030
- FR-A- 339 009
- FR-A- 2 075 390
- GB-A- 8 958
- GB-A- 877 271
- JP-A- 4 869
- JP-B- 382 955
- US-A- 1 598 936

## Description

The present invention relates to a multiple-gas-phase-liquid treatment apparatus as set forth in the preamble of the claim.

It is important in breeding of aquatic life to quickly supply oxygen required for breathing in a breeding liquid and to quickly remove unnecessary carbon acid gas from the breeding liquid. Such dissolving of the gas into the liquid or removal (evaporation) of the gas from the liquid relies upon a size of a contact surface area between the gas and the liquid.

Whether the gas is dissolved in the liquid or is removed from the liquid is determined by the relationship between a partial pressure of the gas in the atmosphere containing the gas and a partial pressure of the gas (dissolved) in the liquid. That is, if the partial pressure of the gas in the atmosphere is higher than the partial pressure in the liquid, the gas is dissolved in the liquid and, conversely, if the partial pressure of the gas in the atmosphere is lower than the partial pressure in the liquid, the gas is removed from the liquid. The invention utilizes this physical phenomenon to efficiently dissolve or remove the gas into or from the liquid.

The aspect, in which the gas is dissolved in water, will be described as an example of oxygen. Oxygen in a gas is quickly dissolved in a surface of the water due to a diffusion phenomenon (this phenomenon is also diffusion), but the dissolved oxygen is diffused in the water extremely slowly. That is, only 0.0001 second or 0.01 second will be required for diffusion of distances over 1 µm (micron) and 10 µm (microns), respectively. If the distances become 1 mm and 1 cm, however, 100 seconds and 3 hours are required respectively. Stream of the water plays an important role to transmit the oxygen to water which is not in contact with the oxygen, so that the dissolving phenomenon due to the above-described increase in the contact surface contact is described from another angle theoretically.

Microorganism decomposes an organic matter under the separated and accumulated gas phase for the purpose of hyperplasia of the microorganism per se in the aerobic condition under the gas phase. The decomposing speed is the same as the breeding speed of the microorganism. This means that, if the microorganism is in contact with sewage having the organic matter with the number of individuals to such an extent as to utilize (decompose) a given quantity of organic matters by a single cell division, it is possible to treat the sewage for 20 to 30 minutes.

US-A-1 598 936 discloses an apparatus for dissolving gas into water with the features of the pre-characterizing part of the claim of the present invention. Said apparatus having a structure to vertically accumulate gas as a gas phase under bells in water by feeding gas at the bottom thereof, while the gas supply is shut off and the valve for the gas supply is not opened until the gas entrapped under the bells is absorbed by the water. In this manner a thorough absorption of the gas by the water is obtained and at the same time the gas supply regulates itself automatically. Thus, there is the shortcoming that the treated water is only obtained intermittently. A further drawback is given by the fact that artificial high pressure is used to dissolve said gas into said water while said water and said gas are admitted under pressure in parallel into the container.

From JP-A-48-69 an apparatus is known, wherein gas passes through a bottom portion of a rotating columnar body into a liquid chamber, in which said gas rises in form of fine bubbles within liquid, and said gas is combined at an opening in an inclined partition wall and released to the bottom portion of the next columnar body to repeat this procedure. As the liquid flows from one liquid chamber to the next lower one substantially through a flow pipe and the rotating columnar bodies are too small to provide a gas-liquid contact surface, a substantial absorption of the gas by the liquid is not obtained. However, said gas to be dissolved is more or less bursted into said liquid.

In JP-B1-38-2955 an apparatus is disclosed which also in principle works by bursting gas into liquid. That is, gas from one stage passes through a riser into the adjacent higher stage and is blown down from a slot within a rotating bubble cap into a liquid layer on said higher shelf stage as fine bubbles, while said liquid flows down to the next lower stage through an overflow pipe. Thus, mixture of gas and liquid is performed on the shelf stage.

It is an object of the present invention to provide a multiple-gas-phase-liquid treatment apparatus as set forth in the preamble of the claim overcoming the above-mentioned disadvantages in order to obtain treated water continuously.

This object is achieved by fulfilling the features of the claim.

The effect of the oxygen supply in the invention will be described now. The invention is directed to stagnate or accumulate the gas into the liquid in a plurality of separated manners thereby increasing the contact surface area between the gas and the liquid in a three-dimensional manner and, further, to stir the liquid by a motor located centrally thereby rapidly increasing the contact effect. Since oxygen starvation can be avoided in a three-dimensional manner, that is, since air is accumulated in a multiple stage manner to increase the contact surface area between the oxygen and the water infinitely, it is possible to cope with the oxygen demand of a plenty of microorganisms to an extent near the infinite theoretically. As stirring due to a motor is added, an increase in the contact surface area occurs so that dissolving or evaporation quickly occurs and the oxygen is rapidly supplied. Thus, the carbonic acid gas is quickly removed.

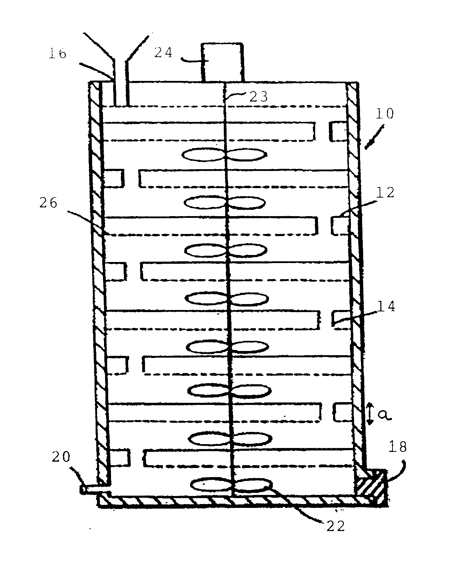

The figure is a vertical cross-sectional view in which a plurality of partition plates 12 are horizontally mounted in a container 10 and, further, a single hollow tube 14 is attached to each of the plates so as to project downwardly. The container 10 has a pouring port 16 through which breeding water enters, a water discharge port 18 through which treated water is taken out, and a vent port 20 through which oxygen or the like is delivered.

Further, a plurality of rotary stirring bars 22 powered by a motor 24 are installed, to increase the contact surface area.

If the water discharge port 18 is closed, if water is poured through the water pouring port 16 and is accumulated, and if gas is introduced through the below vent port 20 the gas is accumulated correspondingly to the height of the tube a.

The surplus gas ascends through the tube 14 and is again accumulated at the upper partition plate 12. Here, if the water discharge port 18 is open and if the water is poured through the water pouring port 16, the water descends through the tubes 14, and the gas ascends through the same tubes 14.

The height a of each of the tubes 14 prescribes the quantity of the gas phase. It is sufficient that a single tube is provided on a single partition plate 12. The tube 14 has its cross-sectional area which should be large when the quantity of flowing water becomes large, or the number of the tubes should increase if the quantity of flowing water becomes large. In the case where a plurality of vertical partitions (not shown) are provided on each of the partition plate 12 to divide the gas phase, the number of tubes 14 (the height a of each of the tubes is shorter than that of each of the vertical partitions (not shown)) is required correspondingly to the number of the divided gas phases.

Breeding water flows in natural fall while being in contact with gas such as oxygen or the like at an artificial water surface 26 in the course of the falling-down. Since the contact surface area increases in a three-dimensional manner, the oxygen or the like increases in chance of dissolving. In the case where the oxygen is vented from the below, the breeding water is initially in contact with the exhaust gas, but the breeding water is in contact with fresh oxygen immediately before coming out of the apparatus as treated water. This becomes opposed flow and is reasonable.

The structure of the present apparatus, namely the pouring port means 16 being provided at an upper portion of the container 10 and the vent port means 20 being provided at a bottom portion of the container 10, assures a countercurrent movement of liquid and gas, especially through the hollow tube means 14. Thus, said liquid flows from one liquid treatment chamber through a hollow tube 14 of the respective horizontal partition plate 12 onto a horizontal partition plate 12 of an adjacent lower liquid treatment chamber substantially due to force of gravity, while said gas accumulates as a gas phase beneath a horizontal partition plate 12 and excess gas ascends through a hollow tube 14 of the respective horizontal partition plate 12 into an adjacent higher liquid treatment chamber to accumulate beneath the partition plate 12 of said adjacent higher liquid treatment chamber. In this manner said gas is dissolved in said liquid by flow of said liquid under the respective gas phase below each partition plate 12. In order to achieve this gas-liquid dissolving mechanism, being the essential feature of the present invention, the location of the pouring port 16 and the vent port 20 as well as the horizontal displacement of the hollow tubes 14 within the partition plates 12 with respect to each other is important for the realization of the present invention.

In addition, the above described structure of the present apparatus assures that liquid flowing down from one partition plate 12 to the next in a meander-like manner is in contact with fresh gas immediately before entering the discharge port means 18.

When the water flows in through the above water pouring port 16 and is taken out through the water discharge port 18, the gas enters through the below vent port 20 and, further, the water is stirred. Thus, it is possible for the apparatus to obtain water in which the gas is well rapidly dissolved. The number of the motors 24 increases depending upon the scale and configuration of the apparatus.

If a mixture of sewage and activated sludge is poured in place of the breeding water, and if air or oxygen enters from the below of the apparatus, the gas phase is accumulated below each plate 14, and the organic matter in the sewage is decomposed for a short period of time under the condition rich in oxygen. Thus, it is possible to obtain sludge water containing low organic platter as the treated water, from the apparatus.

According to the invention, an apparatus can be made which is low in cost and which dissolves and supplies the gas in an immediate effect manner or which removes the gas in an immediate effect manner. In the case of the use of the oxygen, it is possible to continuously supply the breeding water which is useful in breeding all of aquatic life.

If a culture liquid is substituted for the sewage, and if a useful microorganism is substituted for the activated sludge, the large-quantity continuous culture is made possible easily in the apparatus.

If a sugar liquid is substituted for the sewage and if useful yeast is substituted for the activated sludge, it is possible to obtain fermentation products such as alcoholic drink, beer, low-class distilled spirits, vinegar or the like in the apparatus. In this connection, in consideration of the period using the oxygen as the gas and the subsequent period of anaerobic fermentation using no oxygen as the gas, it is required to vary the kind of gases to effect control. It is also possible to treat the culture liquid by the present apparatus and to cultivate the culture liquid in another tank.

In any event, at any rate of the gas used in the invention, it can easily be understood to enable the gas to be dissolved in the liquid to the extent of saturation in a moment. Conversely, the invention should be operated in the atmosphere in which the gas is not contained, to evaporate and remove the gas which is dissolved in the liquid. Thus, application is very wide.

## Claims

1. A multiple-gas-phase-liquid treatment apparatus comprising a container means (10); a plurality of horizontal partition plates (12) mounted in the hollow interior of said container means (10) to define a plurality of vertically stacked liquid treatment chambers; pouring port means (16) connected to said container means (10) for introducing liquid into said hollow interior; discharge port means (18) connected to said container means (10) for discharging treated liquid; vent port means (20) for introducing gas into said hollow interior, and hollow tube means (14) comprising a hollow tube connected to each horizontal partition plate (12) and projecting downwardly a predetermined distance (a) from said horizontal partition plate (12) into an adjacent lower liquid treatment chamber, said hollow tubes (14) being connected to said horizontal partition plates (12) in staggered relation to each other,
characterised in that :
liquid is introduced with the help of the pouring port means (16) provided at an upper portion of said container (10) and flows from one partition plate (12) to an adjacent lower partition plate (12) through hollow tube means (14), liquid in one liquid treatment chamber flowing through the hollow tube (14) of its respective horizontal partition plate (12) onto a horizontal partition plate (12) of an adjacent lower liquid treatment chamber and finally to the discharge port means (18) in the bottom portion of said container (10), while gas introduced by vent port means (20) into the bottom portion of the hollow interior of the container (10) accumulates beneath said horizontal partition plates (12) to a height equal to said predetermined distance (a), excess gas ascending through said hollow tubes (14) wherein said hollow tubes (14) are horizontally displaced with respect to each other; and mechanical agitation means comprising a rotor shaft (23) extending from the top portion of said hollow interior through said plurality of horizontal partition plates (12) to said bottom portion of said hollow interior, a plurality of stirring bars (22), each of said stirring bars (22) being connected to said rotor shaft (23) in one of said liquid treatment chambers, and motor means (24) mounted on said container means (10) for rotating said rotor shaft (23) in order to agitate liquid in each of said vertically stacked liquid treatment chambers.

## Patentansprüche

1. Vorrichtung zur Behandlung von Flüssigkeiten mit mehreren Gasphasen, die umfaßt: eine Behältereinrichtung (10); eine Mehrzahl von horizontalen Trennplatten (12), die in dem hohlen Inneren der Behältereinrichtung (10) montiert sind, um eine Mehrzahl von vertikal gestapelten Flüssigkeitsbehandlungskammern zu bilden; eine Gießöffnungseinrichtung (16), die mit der Behältereinrichtung (10) zum Einleiten von Flüssigkeit in das hohle Innere verbunden ist; eine Abflußöffnungseinrichtung (18), die mit der mit Behältereinrichtung (10) zum Abfließen behandelter Flüssigkeit verbunden ist; eine Belüftungsöffnungseinrichtung (20) zum Einleiten von Gas in das hohle Innere, und eine Hohlrohreinrichtung (14), die ein Hohlrohr umfaßt, das mit jeder horizontalen Trennplatte (12) verbunden ist und nach unten eine vorherbestimmte Entfernung (a) von der horizontalen Trennplatte (12) in eine benachbarte untere Flüssigkeitsbehandlungskammer vorragt, wobei die Hohlrohre (14) mit den horizontalen Trennplatten (12) versetzt zueinander verbunden sind, dadurch gekennzeichnet, daß Flüssigkeit mit Hilfe der Gießöffnungseinrichtung (16), die an einem oberen Abschnitt des Behälters (10) vorgesehen ist, eingeleitet wird und von einer Trennplatte (12) zu einer benachbarten unteren Trennplatte (12) durch die Hohlrohreinrichtung (14) fließt, wobei Flüssigkeit in einer Flüssigkeitsbehandlungskammer durch das Hohlrohr (14) ihrer jeweiligen horizontalen Trennplatte (12) auf eine horizontale Trennplatte (12) einer benachbarten unteren Flüssigkeitsbehandlungskammer und schließlich zur Abflußöffnungseinrichtung (18) in dem Bodenabschnitt des Behälters (10) fließt, während Gas, das durch die Belüftungsöffnungseinrichtung (20) in den Bodenabschnitt des hohlen Inneren des Behälters (10) eingeleitet wird, sich unter den horizontalen Trennplatten (12) bis zu einer Höhe ansammelt, die der vorherbestimmten Entfernung (a) gleicht, wobei ein Gasüberschuß durch die Hohlrohre (14) aufsteigt, wobei die Hohlrohre (14) horizontal zueinander beabstandet sind; und eine mechanische Rühreinrichtung, die eine Rotorwelle (23), die sich von dem oberen Abschnitt des hohlen Inneren durch die Mehrzahl von horizontalen Trennplatten (12) zum Bodenabschnitt des Bodeninneren erstreckt, eine Mehrzahl von Rührschaufeln (22), die mit der Rotorwelle (23) in einer der Flüssigkeitsbehandlungskammern verbunden sind, und eine Motoreinrichtung (24) umfaßt, die an der Behältereinrichtung (10) zum Drehen der Rotorwelle (23) montiert ist, um Flüssigkeit in jeder der vertikal gestapelten Flüssigkeitsbehandlungskammern zu rühren.

## Revendications

1. Appareil de traitement multiple gaz-liquide, comprenant un récipient (10) ; plusieurs plaques de séparation horizontales (12) montées dans l'intérieur creux dudit récipient (10) de façon à définir plusieurs chambres de traitement de liquide empilées verticalement ; un orifice de versement (16) communiquant avec ledit récipient (10) pour introduire un liquide dans ledit intérieur creux ; un orifice d'évacuation (18) communiquant avec ledit récipient (10) pour évacuer le liquide traité ; un orifice de ventilation (20) pour introduire un gaz dans ledit intérieur creux, et un système de tubes creux (14) comprenant un tube creux relié à chaque plaque de séparation horizontale (12) et dépassant vers le bas de ladite plaque de séparation horizontale (12) sur une distance prédéterminée (a) dans une chambre inférieure adjacente de traitement du liquide, lesdits tubes creux (14) étant reliés auxdites plaques de séparation horizontales (12) en étant décalés entre eux, caractérisé par le fait que : le liquide est introduit au moyen de l'orifice de versement (16) prévu à une partie supérieure dudit récipient (10) et s'écoule depuis une plaque de séparation (12) vers une plaque de séparation inférieure adjacente (12) en passant par le système de tubes creux (14), le liquide présent dans une chambre de traitement de liquide s'écoulant par le tube creux (14) pour aller de sa plaque de séparation horizontale (12) correspondante sur une plaque de séparation horizontale (12) d'une chambre inférieure adjacente de traitement de liquide et, finalement, à l'orifice d'évacuation (18) aménagé dans la partie inférieure dudit récipient (10), tandis que le gaz introduit par l'orifice de ventilation (20) dans le fond de l'intérieur creux du récipient (10) s'accumule au-dessous desdites plaques de séparation horizontales (12) jusqu'à une hauteur égale à ladite distance prédéterminée (a), le gaz en excès montant par lesdits tubes creux (14), lesdits tubes creux (14) étant décalés horizontalement les uns par rapport aux autres ; et par un moyen d'agitation mécanique comprenant un arbre de rotor (23) s'étendant depuis le sommet dudit intérieur creux jusqu'au fond dudit intérieur creux en traversant lesdites plaques de séparation horizontales (12), plusieurs bras d'agitation (22), chacun desdits bras d'agitation (22) étant relié audit arbre de rotor (23) dans l'une desdites chambres de traitement de liquide, et un moteur (24) monté sur ledit récipient (10) pour faire tourner ledit arbre de rotor (23) afin d'agiter le liquide présent dans chacune desdites chambres de traitement de liquide empilées verticalement.
